# EUROPEAN PATENT SPECIFICATION

(11) **EP 4 431 869 B1**
(45) Date of publication and mention of the grant of the patent: **18.03.2026**
(21) Application number: 23206737.1
(22) Date of filing: 30.10.2023
(51) Int. Cl.: G01B 11/25

(54) **DEPTH SENSOR DEVICE AND METHOD FOR OPERATING A DEPTH SENSOR DEVICE**
TIEFENSENSORVORRICHTUNG UND VERFAHREN ZUM BETREIBEN EINER TIEFENSENSORVORRICHTUNG
DISPOSITIF DE DÉTECTION DE PROFONDEUR ET PROCÉDÉ DE FONCTIONNEMENT D'UN DISPOSITIF DE DÉTECTION DE PROFONDEUR

(30) Priority: 17.03.2023 EP 23162615
(43) Date of publication of application: 18.09.2024
(73) Proprietor: Sony Semiconductor Solutions Corporation, Atsugi-shi, Kanagawa 243-0014 (JP)
(72) Inventor: BRYNER, Samuel, 70327 Stuttgart (DE); PETITJEAN, Astrid, 70327 Stuttgart (DE)
(74) Representative: Müller Hoffmann & Partner

(56) References cited:
- WO-A1-2019/008330
- WO-A1-2023/001916
- WO-A1-2023/001943
- WO-A1-2023/117387
- US-A1- 2022 155 059
- US-B2- 9 696 137

## Description

### FIELD OF THE INVENTION

The present disclosure relates to a sensor device and a method for operating a sensor device. In particular, the present disclosure is related to the generation of a depth map of a scene.

### BACKGROUD

In recent years techniques for automatic measuring of distances by sending and receiving light have drawn much attention to them. Such techniques comprise the usage of structured light, i.e. the illumination of an object with static or time varying sparse light patterns in various solid angles such as to generate e.g. line, bar or checkerboard patterns, or active stereo depth sensing. For a known orientation of light source and camera it is possible to determine the shape and the distance of an object from triangulation based on the known positions of the light source, the camera, the orientation of the emitted light in space, and the position of the according light signal on the camera.

WO 2019/008330 A1, WO 2023/001916 A and US 9 696 137 B2 disclose scanning a pattern across an object, detecting the events and correlating pixel position with solid angle.

It is desirable to further improve such structured light systems.

### SUMMARY OF THE INVENTION

In conventional systems for depth estimation a set of illumination patterns providing high intensities at predetermined solid angles is sent out to an object and the distribution of light reflected from the object is measured by a receiver such as a camera. The task is then to find for the known solid angles of light emission, the solid angles of maximum light reception on the receiver. Due to the limited density of intensity changes in the illumination pattern and the limited pixel resolution, for the determination of the solid angle of maximum light reception a fit of the expected intensity distribution to the measured intensity values has to be made. In conventional systems this requires storage of all intensity values obtained at all pixels of the camera for all different illuminations. Only after all intensity values have been stored, a depth map can be generated. Thus, in conventional systems memory space must be large. Further, complete storage of intensity values leads to an enhanced latency in the system. Also, the available pixel resolution is limited by the readout speed, if applications with real-time behavior are envisaged, since too many pixels will lead to too long processing times.

These shortcomings of conventional depth estimation techniques may be mitigated by using event-based sensors, i.e. sensors that are sensitive only to changes in the received signal. The present disclosure aims to improve depth sensing that is based on event-based sensors.

To this end, a sensor device for generating a depth map of a scene is provided, as claimed in claim 1, which sensor device comprises a projector unit that is configured to project a plurality of temporal series of light patches on the scene, with consecutive light patches of one series being either shifted along a first direction or a second direction that is opposite to the first direction, a receiver unit that is arranged at a predetermined distance from the projector unit and configured to observe reflections of the light patches from the scene, and a control unit that is configured to temporally correlate the projected light patches with the observed reflections and to use the correlation and the predetermined distance to generate the depth map of the scene. Here, the receiver unit comprises a plurality of event detection pixels that indicate occurrence of an event when a light intensity that is measured by a respective event detection pixel changes by more than a predetermined amount in a given time period. Further, the time it takes for an event detection pixel to indicate the occurrence of an event depends on the absolute magnitude of the light intensity before the change of light intensity, and each event detection pixel is configured to receive light only from a predetermined solid angle, wherein solid angles observed by adjacent event detection pixels are adjacent and the observed solid angles of all event detection pixels span the field of view of the receiver unit. The control unit is configured to determine during a shift of light patches in the first direction as well as during a shift of light patches in the second direction for each occurrence of an event the predetermined solid angle of the respective event detection pixel and the projection angle under which the projector unit did project a light patch at the time at which the event occurred, and the control unit is configured to average for each given pair of event occurrences the respectively determined projection angles for the shift of light patches in the first direction and the shift of light patches in the second direction, and to determine a depth map of the scene based on the pairs of predetermined solid angle and averaged projection angle determined for each event occurrence.

Further, a method for operating a sensor device as claimed in claim 8 comprises: projecting a plurality of temporal series of light patches on the scene, with consecutive light patches of one series being either shifted along a first direction or a second direction that is opposite to the first direction; observing reflections of the light patches from the scene; temporally correlating the projected light patches with the observed reflections and using the correlation and the predetermined distance to generate the depth map of the scene; determining during a shift of light patches in the first direction as well as during a shift of light patches in the second direction for each occurrence of an event the predetermined solid angle of the respective event detection pixel and the projection angle under which a light patch was projected at the time at which the event occurred; and averaging for each given pair of event occurrences the respectively determined projection angles for the shift of light patches in the first direction and the shift of light patches in the second direction, and determining a depth map of the scene based on the pairs of predetermined solid angle and averaged projection angle determined for each event occurrence.

By averaging projection angles detected for different directions of light patch sweeping, negative effects due to latency differences in event detection pixels that are caused by brightness differences of the scene can be suppressed.

### BRIEF DESCRIPTION OF THE DRAWINGS

Fig. 1A is a simplified block diagram of the event detection circuitry of a solid-state imaging device including a pixel array.
Fig. 1B is a simplified block diagram of the pixel array illustrated in Fig. 1A.
Fig. 1C is a simplified block diagram of the imaging signal read-out circuitry of the solid-state imaging device of Fig. 1A.
Fig. 2 shows schematically a sensor device.
Fig. 3 shows schematically another sensor device.
Fig. 4 shows schematically the dependency of event detection pixel latency on brightness.
Figs. 5A to 5C show schematically an operation principle of a sensor device.
Fig. 6 shows schematically an operation principle of a sensor device.
Fig. 7 shows schematically an operation principle of a sensor device.
Fig. 8 shows schematically generation of light patches having different colors.
Fig. 9 shows schematically a color filter array used in a sensor device.
Figs. 10A and 10B show schematically different exemplary applications of a camera comprising a depth sensor device.
Fig. 11 shows schematically a head mounted display comprising a depth sensor device.
Fig. 12 shows schematically an industrial production device comprising a depth sensor device.
Fig. 13 shows a schematic process flow of a method of operating a sensor device.
Fig. 14 is a simplified perspective view of a solid-state imaging device with laminated structure according to an embodiment of the present disclosure.
Fig. 15 illustrates simplified diagrams of configuration examples of a multi-layer solid-state imaging device to which a technology according to the present disclosure may be applied.
Fig. 16 is a block diagram depicting an example of a schematic configuration of a vehicle control system.
Fig. 17 is a diagram of assistance in explaining an example of installation positions of an outside-vehicle information detecting section and an imaging section of the vehicle control system of Fig. 16.

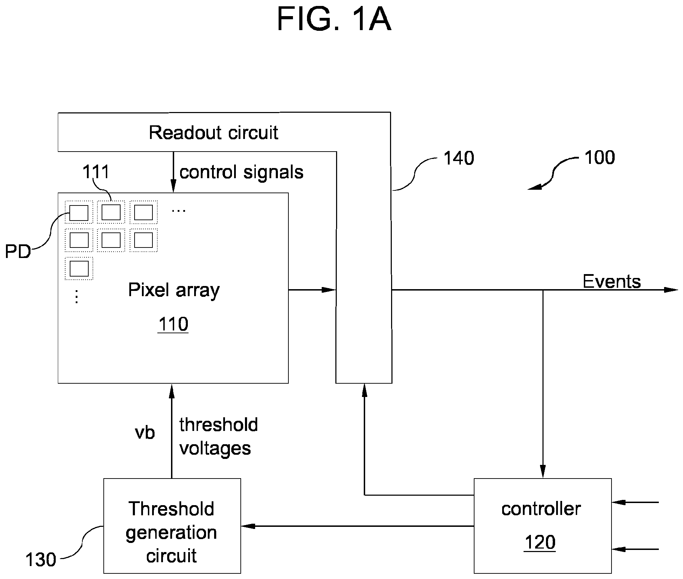

The present disclosure relies on event detection by event visions sensor/dynamic vision sensors. Although these sensors are in principle known to a skilled person a brief overview will be given with respect to Figs. 1A to 1C.

Fig. 1A is a block diagram of a solid-state imaging device 100 employing event-based change detection. The solid-state imaging device 100 includes a pixel array 110 with one or more imaging pixels 111, wherein each pixel 111 includes a photoelectric conversion element PD. The pixel array 110 may be a one-dimensional pixel array with the photoelectric conversion elements PD of all pixels arranged along a straight or meandering line (line sensor). In particular, the pixel array 110 may be a two-dimensional array, wherein the photoelectric conversion elements PDs of the pixels 111 may be arranged along straight or meandering rows and along straight or meandering lines.

The illustrations show a two dimensional array of pixels 111, wherein the pixels 111 are arranged along straight rows and along straight columns running orthogonal the rows. Each pixel 111 converts incoming light into an imaging signal representing the incoming light intensity and an event signal indicating a change of the light intensity, e.g. an increase by at least an upper threshold amount (positive polarity) and/or a decrease by at least a lower threshold amount (negative polarity). If necessary, the function of each pixel 111 regarding intensity and event detection may be divided and different pixels observing the same solid angle can implement the respective functions. These different pixels may be subpixels and can be implemented such that they share part of the circuitry. The different pixels may also be part of different image sensors. For the present disclosure, whenever it is referred to a pixel capable of generating an imaging signal and an event signal, this should be understood to include also a combination of pixels separately carrying out these functions as described above. Preferably, in the present disclosure the pixels 111 are only capable of generating an event signal.

A controller 120 performs a flow control of the processes in the pixel array 110. For example, the controller 120 may control a threshold generation circuit 130 that determines and supplies thresholds to individual pixels 111 in the pixel array 110. A readout circuit 140 provides control signals for addressing individual pixels 111 and outputs information about the position of such pixels 111 that indicate an event. Since the solid-state imaging device 100 employs event-based change detection, the readout circuit 140 may output a variable amount of data per time unit.

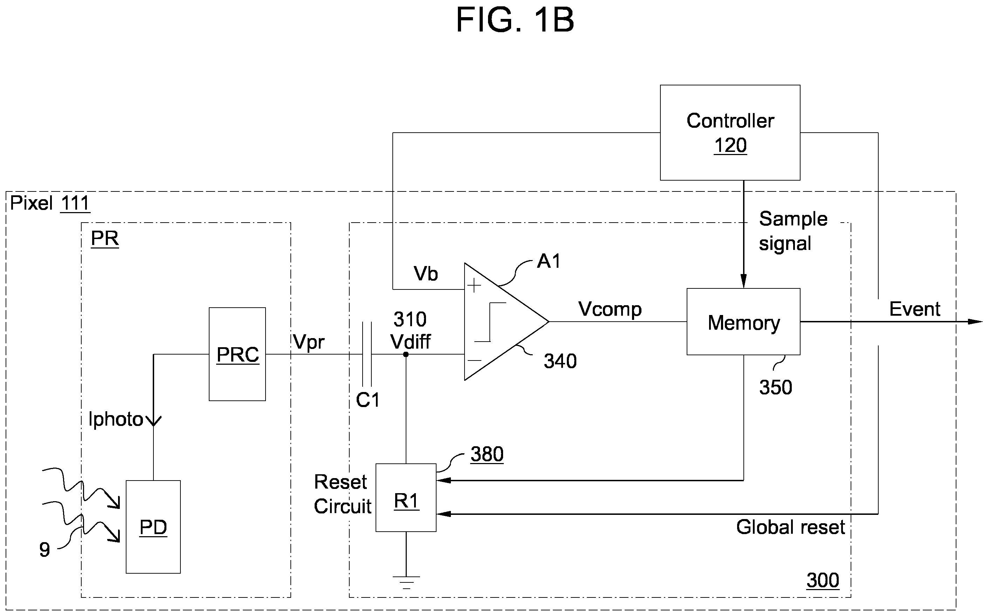

Fig. 1B shows exemplarily details of the imaging pixels 111 in Fig. 1A as far as their event detection capabilities are concerned. Of course, any other implementation that allows detection of events can be employed. Each pixel 111 includes a photoreceptor module PR and is assigned to a pixel back-end 300, wherein each complete pixel back-end 300 may be assigned to one single photoreceptor module PR. Alternatively, a pixel back-end 300 or parts thereof may be assigned to two or more photoreceptor modules PR, wherein the shared portion of the pixel back-end 300 may be sequentially connected to the assigned photoreceptor modules PR in a multiplexed manner.

The photoreceptor module PR includes a photoelectric conversion element PD, e.g. a photodiode or another type of photosensor. The photoelectric conversion element PD converts impinging light 9 into a photocurrent Iphoto through the photoelectric conversion element PD, wherein the amount of the photocurrent Iphoto is a function of the light intensity of the impinging light 9.

A photoreceptor circuit PRC converts the photocurrent Iphoto into a photoreceptor signal Vpr. The voltage of the photoreceptor signal Vpr is a function of the photocurrent Iphoto.

A memory capacitor 310 stores electric charge and holds a memory voltage whose amount depends on a past photoreceptor signal Vpr. In particular, the memory capacitor 310 receives the photoreceptor signal Vpr such that a first electrode of the memory capacitor 310 carries a charge that is responsive to the photoreceptor signal Vpr and thus the light received by the photoelectric conversion element PD. A second electrode of the memory capacitor C1 is connected to the comparator node (inverting input) of a comparator circuit 340. Thus the voltage of the comparator node, Vdiff varies with changes in the photoreceptor signal Vpr.

The comparator circuit 340 compares the difference between the current photoreceptor signal Vpr and the past photoreceptor signal to a threshold. The comparator circuit 340 can be in each pixel back-end 300, or shared between a subset (for example a column) of pixels. According to an example each pixel 111 includes a pixel back-end 300 including a comparator circuit 340, such that the comparator circuit 340 is integral to the imaging pixel 111 and each imaging pixel 111 has a dedicated comparator circuit 340.

A memory element 350 stores the comparator output in response to a sample signal from the controller 120. The memory element 350 may include a sampling circuit (for example a switch and a parasitic or explicit capacitor) and/or a digital memory circuit such as a latch or a flip-flop. The memory element 350 may be a sampling circuit. The memory element 350 may be configured to store one, two or more binary bits.

An output signal of a reset circuit 380 may set the inverting input of the comparator circuit 340 to a predefined potential. The output signal of the reset circuit 380 may be controlled in response to the content of the memory element 350 and/or in response to a global reset signal received from the controller 120.

The solid-state imaging device 100 is operated as follows: A change in light intensity of incident radiation 9 translates into a change of the photoreceptor signal Vpr. At times designated by the controller 120, the comparator circuit 340 compares Vdiff at the inverting input (comparator node) to a threshold Vb applied on its non-inverting input. At the same time, the controller 120 operates the memory element 350 to store the comparator output signal Vcomp. The memory element 350 may be located in either the pixel circuit 111 or in the readout circuit 140 shown in Fig. 1A.

If the state of the stored comparator output signal indicates a change in light intensity AND the global reset signal GlobalReset (controlled by the controller 120) is active, the conditional reset circuit 380 outputs a reset output signal that resets Vdiff to a known level.

The memory element 350 may include information indicating a change of the light intensity detected by the pixel 111 by more than a threshold value.

The solid-state imaging device 120 may output the addresses (where the address of a pixel 111 corresponds to its row and column number) of those pixels 111 where a light intensity change has been detected. A detected light intensity change at a given pixel is called an event. More specifically, the term 'event' means that the photoreceptor signal representing and being a function of light intensity of a pixel has changed by an amount greater than or equal to a threshold applied by the controller through the threshold generation circuit 130. To transmit an event, the address of the corresponding pixel 111 is transmitted (optionally) along with data indicating whether the light intensity change was positive or negative. The data indicating whether the light intensity change was positive or negative may include one single bit.

To detect light intensity changes between current and previous instances in time, each pixel 111 stores a representation of the light intensity at the previous instance in time.

More concretely, each pixel 111 stores a voltage Vdiff representing the difference between the photoreceptor signal at the time of the last event registered at the concerned pixel 111 and the current photoreceptor signal at this pixel 111.

To detect events, Vdiff at the comparator node may be first compared to a first threshold to detect an increase in light intensity (ON-event), and the comparator output is sampled on a (explicit or parasitic) capacitor or stored in a flip-flop. Then Vdiff at the comparator node is compared to a second threshold to detect a decrease in light intensity (OFF-event) and the comparator output is sampled on a (explicit or parasitic) capacitor or stored in a flip-flop.

The global reset signal is sent to all pixels 111, and in each pixel 111 this global reset signal is logically ANDed with the sampled comparator outputs to reset only those pixels where an event has been detected. Then the sampled comparator output voltages are read out, and the corresponding pixel addresses sent to a data receiving device. The temporal precision of event detection can be in the range of microseconds.

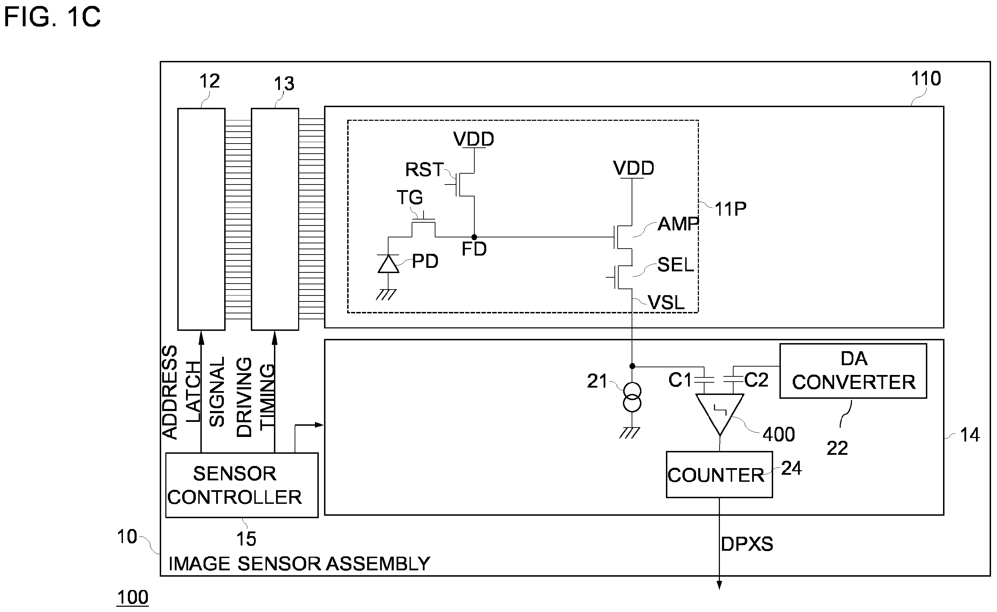

Fig. 1C illustrates a configuration example of the solid-state imaging device 100 including an image sensor assembly 10 that is used for readout of intensity imaging signals in form of an active pixel sensor, APS. Here, Fig. 1C is purely exemplary. Readout of imaging signals can also be implemented in any other known manner. As stated above, the image sensor assembly 10 may use the same pixels 111 or may supplement these pixels 111 with additional pixels observing the respective same solid angles. In the following description the exemplary case of usage of the same pixel array 110 is chosen.

The image sensor assembly 10 includes the pixel array 110, an address decoder 12, a pixel timing driving unit 13, an ADC (analog-to-digital converter) 14, and a sensor controller 15.

The pixel array 110 includes a plurality of pixel circuits 11P arranged matrix-like in rows and columns. Each pixel circuit 11P includes a photosensitive element and FETs (field effect transistors) for controlling the signal output by the photosensitive element.

The address decoder 12 and the pixel timing driving unit 13 control driving of each pixel circuit 11P disposed in the pixel array 110. That is, the address decoder 12 supplies a control signal for designating the pixel circuit 11P to be driven or the like to the pixel timing driving unit 13 according to an address, a latch signal, and the like supplied from the sensor controller 15. The pixel timing driving unit 13 drives the FETs of the pixel circuit 11P according to driving timing signals supplied from the sensor controller 15 and the control signal supplied from the address decoder 12. The electric signals of the pixel circuits 11P (pixel output signals, imaging signals) are supplied through vertical signal lines VSL to ADCs 14, wherein each ADC 14 is connected to one of the vertical signal lines VSL, and wherein each vertical signal line VSL is connected to all pixel circuits 11P of one column of the pixel array unit 11. Each ADC 14 performs an analog-to-digital conversion on the pixel output signals successively output from the column of the pixel array unit 11 and outputs the digital pixel data DPXS to a signal processing unit. To this purpose, each ADC 14 includes a comparator 23, a digital-to-analog converter (DAC) 22 and a counter 24.

The sensor controller 15 controls the image sensor assembly 10. That is, for example, the sensor controller 15 supplies the address and the latch signal to the address decoder 12, and supplies the driving timing signal to the pixel timing driving unit 13. In addition, the sensor controller 15 may supply a control signal for controlling the ADC 14.

The pixel circuit 11P includes the photoelectric conversion element PD as the photosensitive element. The photoelectric conversion element PD may include or may be composed of, for example, a photodiode. With respect to one photoelectric conversion element PD, the pixel circuit 11P may have four FETs serving as active elements, i.e., a transfer transistor TG, a reset transistor RST, an amplification transistor AMP, and a selection transistor SEL.

The photoelectric conversion element PD photoelectrically converts incident light into electric charges (here, electrons). The amount of electric charge generated in the photoelectric conversion element PD corresponds to the amount of the incident light.

The transfer transistor TG is connected between the photoelectric conversion element PD and a floating diffusion region FD. The transfer transistor TG serves as a transfer element for transferring charge from the photoelectric conversion element PD to the floating diffusion region FD. The floating diffusion region FD serves as temporary local charge storage. A transfer signal serving as a control signal is supplied to the gate (transfer gate) of the transfer transistor TG through a transfer control line.

Thus, the transfer transistor TG may transfer electrons photoelectrically converted by the photoelectric conversion element PD to the floating diffusion FD.

The reset transistor RST is connected between the floating diffusion FD and a power supply line to which a positive supply voltage VDD is supplied. A reset signal serving as a control signal is supplied to the gate of the reset transistor RST through a reset control line.

Thus, the reset transistor RST serving as a reset element resets a potential of the floating diffusion FD to that of the power supply line.

The floating diffusion FD is connected to the gate of the amplification transistor AMP serving as an amplification element. That is, the floating diffusion FD functions as the input node of the amplification transistor AMP serving as an amplification element.

The amplification transistor AMP and the selection transistor SEL are connected in series between the power supply line VDD and a vertical signal line VSL.

Thus, the amplification transistor AMP is connected to the signal line VSL through the selection transistor SEL and constitutes a source-follower circuit with a constant current source 21 illustrated as part of the ADC 14.

Then, a selection signal serving as a control signal corresponding to an address signal is supplied to the gate of the selection transistor SEL through a selection control line, and the selection transistor SEL is turned on.

When the selection transistor SEL is turned on, the amplification transistor AMP amplifies the potential of the floating diffusion FD and outputs a voltage corresponding to the potential of the floating diffusion FD to the signal line VSL. The signal line VSL transfers the pixel output signal from the pixel circuit 11P to the ADC 14.

Since the respective gates of the transfer transistor TG, the reset transistor RST, and the selection transistor SEL are, for example, connected in units of rows, these operations are simultaneously performed for each of the pixel circuits 11P of one row. Further, it is also possible to selectively read out single pixels or pixel groups.

The ADC 14 may include a DAC 22, the constant current source 21 connected to the vertical signal line VSL, a comparator 23, and a counter 24.

The vertical signal line VSL, the constant current source 21 and the amplifier transistor AMP of the pixel circuit 11P combine to a source follower circuit.

The DAC 22 generates and outputs a reference signal. By performing digital-to-analog conversion of a digital signal increased in regular intervals, e.g. by one, the DAC 22 may generate a reference signal including a reference voltage ramp. Within the voltage ramp, the reference signal steadily increases per time unit. The increase may be linear or not linear.

The comparator 23 has two input terminals. The reference signal output from the DAC 22 is supplied to a first input terminal of the comparator 23 through a first capacitor C1. The pixel output signal transmitted through the vertical signal line VSL is supplied to the second input terminal of the comparator 23 through a second capacitor C2.

The comparator 23 compares the pixel output signal and the reference signal that are supplied to the two input terminals with each other, and outputs a comparator output signal representing the comparison result. That is, the comparator 23 outputs the comparator output signal representing the magnitude relationship between the pixel output signal and the reference signal. For example, the comparator output signal may have high level when the pixel output signal is higher than the reference signal and may have low level otherwise, or vice versa. The comparator output signal VCO is supplied to the counter 24.

The counter 24 counts a count value in synchronization with a predetermined clock. That is, the counter 24 starts the count of the count value from the start of a P phase or a D phase when the DAC 22 starts to decrease the reference signal, and counts the count value until the magnitude relationship between the pixel output signal and the reference signal changes and the comparator output signal is inverted. When the comparator output signal is inverted, the counter 24 stops the count of the count value and outputs the count value at that time as the AD conversion result (digital pixel data DPXS) of the pixel output signal.

An event sensor as described above might be used in the following, when it is referred to event detection. However, any other manner of implementation of event detection might be applicable.

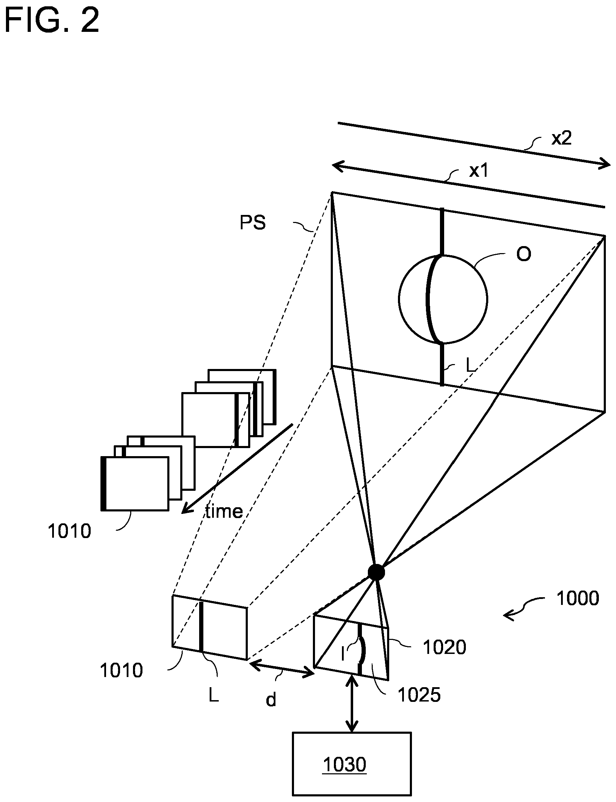

Fig. 2 shows schematically a sensor device 1000 for generating a depth map of a scene, comprising e.g. an object O, i.e. a device that allows deduction of distances of surface elements of the object O to the sensor device 1000. The sensor device 1000 may be capable to generate the depth information itself or may only generate data based on which the depth information can be established in further processing steps. The sensor device comprises a projector unit 1010, a receiver unit 1020, and a control unit 1030.

The projector unit 1010 is configured to illuminate different locations of the object O during different time periods with an illumination pattern. In particular, the projector unit 1010 is configured to project a plurality of temporal series of light patches on the scene, with consecutive light patches of one series being either shifted along a first direction x1 or a second direction x2 that is opposite to the first direction x1.

In the exemplary illustration of Fig. 2 and the following description illumination patterns consisting of lines L will be used, where the positions of the lines L changes with time such that during different time periods different parts of the scene are illuminated with the lines L. Preferably, the solid angles illuminated with the lines L are adjacent to each other such that they completely fill a projection solid angle PS of the projector unit 1010. However, the lines L may also be separated from each other by a certain distance.

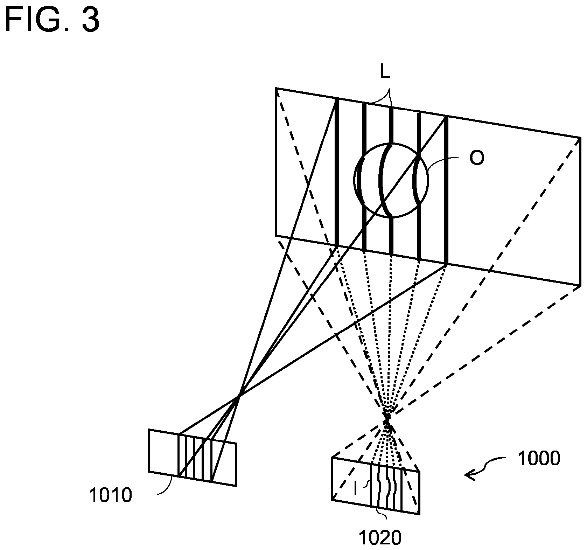

While Fig. 2 shows an example, in which only one line is projected to the scene, also several lines may be projected at the same time, as schematically shown in Fig. 3. Note that the equidistant arrangement of lines in Fig. 3 is only chosen for simplicity. The lines may have arbitrary positions. Also the number of lines, i.e. the number of illuminated predetermined solid angles may change with time.

Although the below description focuses on the line example illustrated in Figs. 2 and 3, a skilled person readily understands that also other sparse illumination patterns may be used such as checkerboard patterns or even pixel-wise illumination. However, any series of light patches projected onto the scene has to move in a predefined and reversible manner across the scene. In the example of lines L shown in Fig. 2 this means that for a series of lines that sweep the scene along the first direction x1 (i.e. from right to left in Fig. 2), there is a series of lines that sweeps the scene in the opposite direction, i.e. the second direction x2 (from left to right in Fig. 2). Here, the range of one sweep does not necessarily have to cover the entire projection solid angle PS but might also cover a subrange of this projection solid angle. For example, a sweep in one direction may include 10, 50 or 100 different positions of light projection that are followed by the illumination of the same positions in reversed order.

As stated above, the example of projected lines is chosen only for ease of description. The projector unit 1010 may project any kind of light patches that can be swept over the scene in a reversible manner. For example, a light dot may be moved over the observed scene in a row-by-row manner with a reversal of the scanning movement after (or during) scanning of the entire scene. Just the same, several light dots may be used. Further, instead of lines running across the entire projection solid angle PS also line segments may be used.

The change of the illumination may be done e.g. by using a fixed light source, the light of which is deflected at different times at different angles. For example, a mirror tilted by a micro-electro-mechanical system (MEMS) might be used to deflect the illumination pattern and/or a refractive grating may be used to produce a plurality of lines. Alternatively, an array of vertical-cavity surface-emitting lasers (VCSELs) or any other laser LEDs might be used that illuminate different parts of the scene/object O at different times. Further, it might also be possible to use shielding optics like slit plates or LCD-panels to produce time varying illumination patterns.

It should also be noted that the projector unit 1010 may be arranged such that some points in the field of view of the projector unit 1010 are never illuminated with the illumination patterns.

Alternatively, the illumination pattern sent out from the projector unit 1010 may be fixed, while the object O moves across the illumination pattern, first in one direction and then in the opposite direction. In principle, the precise manner of the generation of the illumination pattern and its movement across the object is arbitrary, as long as different positions of the object O are illuminated during different time periods in a reversible manner.

The sensor device 1000 comprises a receiver unit 1020 that is arranged at a predetermined distance d from the projector unit 1010 and that is configured to observe reflections of the light patches from the scene. Due to the surface structure of the scene/the object O, the light patches projected from the projector unit 1010 are reflected from the object O in distorted form and form an image I on the receiver unit 1020.

The receiver unit 1020 comprises a plurality of event detection pixels 1025 that indicate occurrence of an event when a light intensity that is measured by a respective event detection pixel 1025 changes by more than a predetermined amount in a given time period. Thus, the receiver unit 1020 can act as an event sensor as described above with respect to Figs. 1A to 1C that can detect changes in the received intensity that exceed a given threshold. Here, positive and negative changes might be detectable, leading to events of so-called positive or negative polarity. Further, the event detection thresholds might be dynamically adaptable and might differ for positive and negative polarities.

The time it takes for an event detection pixel 1025 to indicate the occurrence of an event depends on the absolute magnitude of the light intensity, i.e. the brightness of the observed part of the scene, before (or after) the change of light intensity. Here, the received brightness depends on multiple factors such as the object distance, surface reflectance, the type of reflection (diffuse, directed), ambient light conditions, and the properties of the projected light. Further, each event detection pixel 1025 is configured to receive light only from a predetermined solid angle, wherein solid angles observed by adjacent event detection pixels 102 are adjacent and the observed solid angles of all event detection pixels 1025 span the field of view of the receiver unit 1020. That is, the brighter the solid angle observable by an event detection pixel 1025 is, the faster will the event detection pixel 1025 be in event detection. While a brightly illuminated event detection pixel 1025 will detect an event occurrence almost immediately, a decrease of brightness will lead to an increasing latency of event detection.

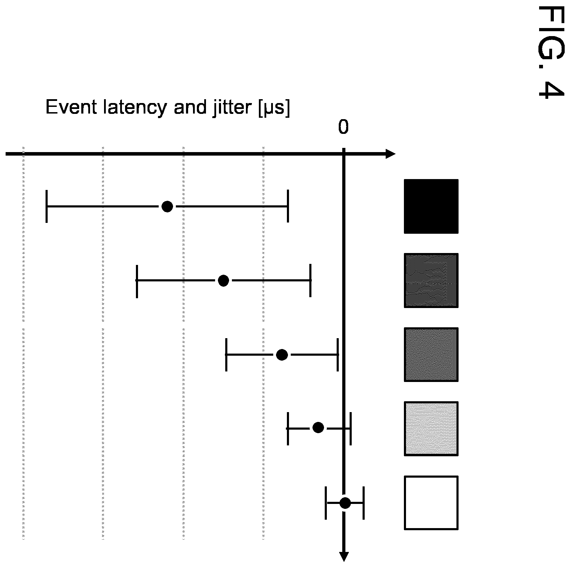

This is schematically illustrated in Fig. 4. Fig. 4 shows that in comparison to a brightly illuminated field (represented by a white square), in this example the latency in event detection increases in average to up to 20 µs for a field with only little illumination (with larger latencies possible). In Fig. 4, error bars reflect the effects of jitter.

This intrinsic dependency of the precise time of event detection on the detectable brightness causes a problem for depth measurements with event detection pixels 1025, when the scene consists of bright and dark areas, such as highly reflective or white and less-reflective or black regions.

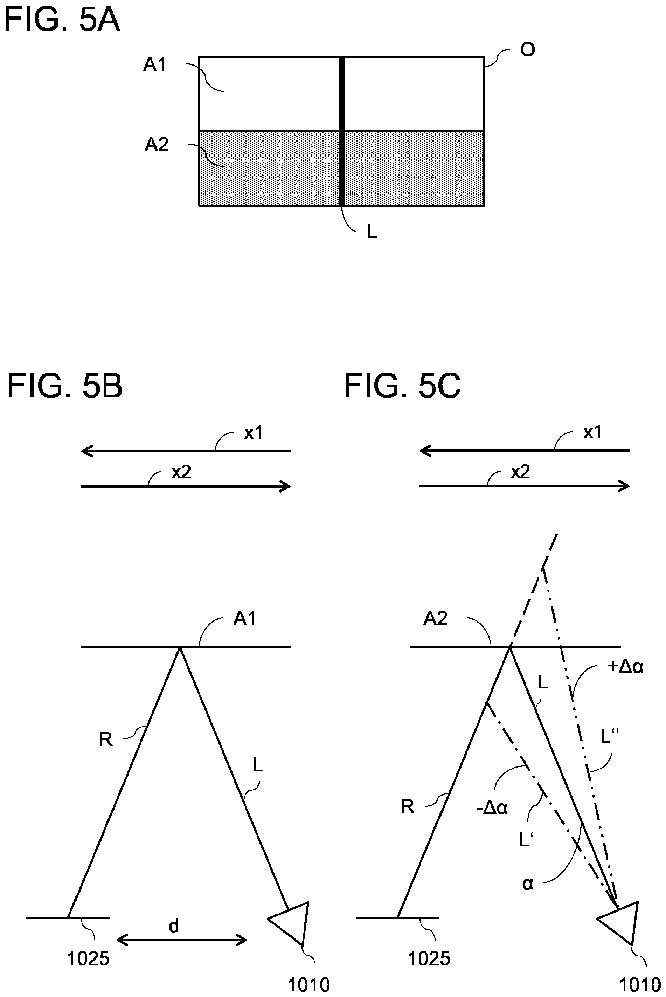

This problem is schematically illustrated in Figs. 5A to 5C. Fig. 5A shows a part of the object O within the observed scene that contains a bright area A1 (e.g. a white or brightly colored surface) and a dark area A2 (e.g. a black or darkly colored surface). A line L running across both areas A1, A2 is swept over the object O, first in the first direction x1 and then in the second direction x2.

Fig. 5B shows event detection for reflections of the line L from the bright area A1. Due to the change of brightness when the reflection R of the line L becomes visible to an event detection pixel 1025 an event is generated. For the bright area A1 this happens almost instantaneously. By relying on the time of event detection and the fact that the projection angle of the line L is known for all times, the projection angle that caused the event can be determined. Since each event detection pixel 1025 observes only a small solid angle that can be imagined as a line of sight and since the distance d between projector unit 1010 and receiver unit 1020 is known, it is possible to determine the distance between the location of the reflection of the line L on the object O and the sensor device 1000.

This operating principle of the sensor device 1000 is deteriorated when the dark area A2 is observed, as will be explained with respect to Fig. 5C.

As in the case of illuminating the bright area A1, the illuminating line L will cause a reflection R that is received by the event detection pixel 1025. However, since the reflection is caused at the dark area A2, the brightness of the reflection R, i.e. the absolute magnitude of the intensity of the reflected light, will be smaller than for a reflection on the bright area A1. The occurrence of an event will therefore not be detected immediately by the event detection pixel 1025, but with a delay Δt. The time stamp of the event will therefore not show the time t at which the line L was projected, but a later time t+Δt. When determining the projection angle of the line L it will therefore be assumed that the line L was projected at the later time t+Δt. Depending on the direction of the line sweep this will lead to an underestimation or overestimation of the projection angle.

In particular, as schematically illustrated in Fig. 5C, when the line L is moved in the first direction x1, i.e. from right to left in Fig. 5C, it will be assumed that it was not the line L that caused the reflection, but a line L' that is to be projected at the later time t+Δt. This line L' has a projection angle that is smaller by an amount Δα than the projection angle α of the line L projected at time t. Thus, when sweeping across the dark area A2 in the first direction x1, it will be assumed that all reflections R are caused by lines having a projection angle that is smaller by Δα than the true projection angle α. In triangulation, this leads in turn to an underestimation of the distance between the dark area A2 and the sensor device 1000. For the sweep in the first direction, i.e. for a sweep in a direction towards the receiver unit 1020, dark areas will therefore be estimated to be closer than they truly are.

When sweeping in the opposite direction, i.e. the second direction x2, or away from the receiver unit 1020, the delay Δt leads to the estimation that the reflection R was caused by a line L" having a projection angle that is larger by an amount Δα than the projection angle of the line L projected at time t. In triangulation, this larger projection angle leads to an overestimation of the distance between the dark area A2 and the sensor device 1000. Thus, when sweeping in the second direction, i.e. away from the receiver unit 1020, dark areas will appear to be farther away.

Thus, without countermeasures a depth map that is generated based on events detected by event detection pixels having a brightness-dependent latency will not truly represent the shape of the observed objects. Possible solutions to this problem include, e.g. to increase the light intensity of the projected light patches, to estimate the absolute intensity in order to compensate the latency or to adjust the sensor circuitry. However, an increase in light intensity will only reduce the problem, but will not solve it, since dark surfaces will always appear darker than surfaces of a bright color. Further, while an estimation of the absolute intensity is possible in principle, e.g. by event count per pixel, the measurement of jitter/noise, which depends on the absolute intensity, or by additional camera systems, these approaches necessitate additional processing and/or additional structural elements. This will increase the complexity and cost of the system as well as its processing time. Just the same is true for an adaption of the sensor circuitry.

Proposed is therefore a different manner to solve or at least decrease the problem of latency of event detection pixels in structured light systems as the one described above. This solution uses the fact that the sign of the change of the projection angle depends on the direction of the shift of the projected light patches across the scene. Since the change has a different direction for different shift/scan/sweep directions, a combination of measurements carried out for different sweeping directions should at least reduce, if not cancel, the error.

To this end, the control unit 1030 is provided that is configured to temporally correlate the projected light patches with the observed reflections and to use the correlation and the predetermined distance to generate the depth map of the scene. In particular, the control unit 1030 is configured to determine during a shift of light patches in the first direction x1 as well as during a shift of light patches in the second direction x2 for each occurrence of an event the predetermined solid angle of the respective event detection pixel 1025 and the projection angle under which the projector unit 1010 did project a light patch at the time at which the event occurred. That is, the control unit 1030 determines for a sweep in one direction for each event the line of sight of the event detection pixel 1025 that detected the event, the time at which the event was detected, and the angle under which a light patch was projected that could have crossed the line of sight of the event detection pixel 1025. The same is then carried out for a sweep in the opposite direction. Thus, for each event detection pixel 1025/line of sight at least one pair of projection angles is determined whose difference depends on the brightness of the received light, i.e. on the brightness of the surface that reflected the projected light patch. If this surface is very bright, the pair of projection angles will be essentially equal, since no delay did occur.

The control unit 1030 averages then for each given pair of event occurrences, i.e. for each pair of projection angles, the respectively determined projection angles for the shift of light patches in the first direction x1 and the shift of light patches in the second direction x2, and determines a depth map of the scene based on the pairs of predetermined solid angle and averaged projection angle determined for each event occurrence. That is, triangulation is not carried out based on the apparent projection angles, that might be underestimated or overestimated, but on the average of projection angles measured during sweeps in different directions. Since the deviations from the true projection angle will compensate each other, the triangulation will provide the true distance to the observed object. Thus, a more reliable depth map can be generated.

In the above description it was assumed that the average of two apparent projection angles each obtained from one sweep in each of the two directions is used. Of course, it will also be possible to carry out several sweeps (but the same number) in each direction and to average the values of all the detected projection angels before triangulating.

Further, the above description assumed that the velocity of the shift of light patches in both directions is the same and constant. Thus, a delay of Δt will always lead to the same change of projection angle. Of course, it is also possible to use different sweeping velocities, i.e. different changes of projection angles per time unit, either within a single sweep in one direction or for the sweeps in different directions. However, since the projector patterns are known, changes in velocity are also known. The respectively determined projection angles can then be weighted or normalized in the averaging process in order to compensate velocity differences. The above used term "averaging" shall be understood to include such compensations.

In this manner it is possible to compensate or at least reduce errors in the depth map caused by different delay times of the used event detection pixels 1025 by a simple arithmetic operation and by using standard components of a typical structured light system. Thus, the reliability of the generated depth maps can be increased with comparably little increase of the systems complexity and processing load. The generation of depth maps can therefore by made more reliable without unduly increasing the system costs or its energy consumption.

Here, the control unit 1030 may be any arrangement of circuitry that is capable to carry out the functions described herein. For example, the control unit 1030 may be constituted by a processor. The control unit 1030 may be part of the pixel section of the sensor device 1000 and may be placed on the same die(s) as the other components of the sensor device 1000. But the control unit 1030 may also be arranged separately, e.g. on a separate die, a separate processor or even a separate computer. The functions of the control unit 1030 may be fully implemented in hardware, in software or may be implemented as a mixture of hardware and software functions.

As described above, the temporal series of light patches may be a temporal series of light lines L that is swept across the scene. While in the above description the light lines L are straight lines that intersect the first direction x1 at 90°, the lines might intersect the first direction x1 in principle under any predetermined angle that differs sufficiently from 0° to allow a full coverage of the scene. Alternatively, the light lines may also be curved lines. As stated above, the series of light patches may also include light points or dots, line segments, combinations therefore or the like, as long as the specific movement of the light patches in one temporal series can be reversed in another temporal series.

In the above description, the apparent projection angles measured during sweeps in different directions are used to compensate deviations Δα from the true projection angle α. However, additionally or alternatively, the control unit 1030 may be configured to determine for each pair of event occurrences the absolute magnitude of light intensity before the change of light intensity by subtracting the respectively determined projection angles for the shift of light patches in the first direction x1 and the shift of light patches in the second direction x2. That is, the delay in event detection caused by dark areas and the resulting over-/underestimation of projection angles can also be used to determine the absolute intensity that was received by the event detection pixel 1025. In this manner images of the scene can be obtained.

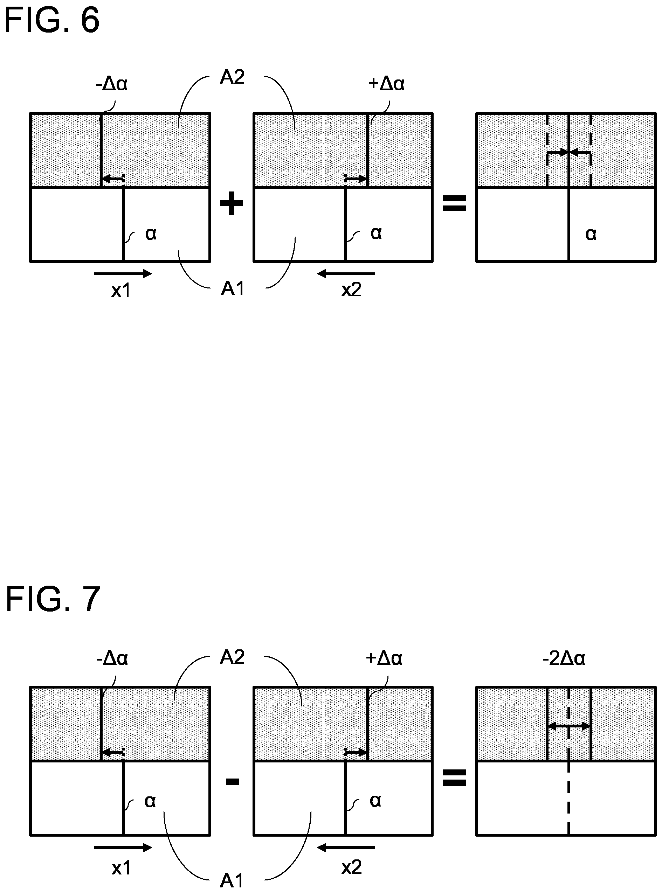

This is schematically exemplified in Figs. 6 and 7. Here, Fig. 6 shows again how the compensation of deviations of projection angles is made. In both figures a flat area having a bright area A1 and a dark area A2 are observed. When sweeping in a first direction x1 the projection angle of a line projected to a bright area A1 and a dark area A2 will be underestimated by Δα in the dark area A2, while it will be (sufficiently) correct in the bright area A1. When reversing the sweeping direction, the projection angle will be overestimated in the dark area A2. Averaging the two measurements of the projection angle will result in the true projection angle α in the bright area A1 and the dark area A2.

On the other hand, subtracting both measurements will provide a measure for the "darkness" of the observed area as shown in Fig. 7. Here, subtracting the measurements provides the shift in projection angle Δα. This shift can in turn be related to a time delay in the respective event detection pixel 1025. From calibration during manufacturing it is known how this time delay is related to the observed absolute intensity before (or after) the event occurrence. Thus, starting from an intensity level that causes no delay, i.e. a shift in projection angle of Δα=0, it is possible to deduce the intensity level based on the shift in projection angle Δα. The larger the shift Δα is, the less is the absolute light intensity at the event detection pixel 1025.

Thus, besides compensating for errors in the depth map due to the time delay, the above procedure can also be used to obtain additional information on the observed absolute intensity values.

Above, it was assumed that all light patches emitted by the projector unit have the same color, i.e. are generated by a light source with a given wavelength (spectrum) such as e.g. a laser. However, the plurality of temporal series of light patches may also include series of light patches of different colors such that for each series of light patches of one color that is shifted in the first direction x1 there is a series of light patches of the same color that is shifted in the second direction x2.

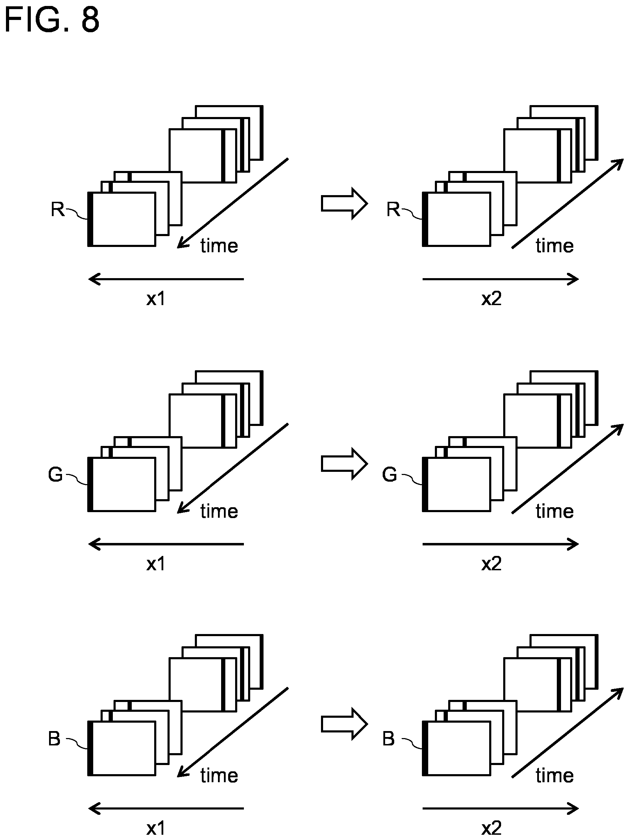

This means, the above measurements of apparent projection angles are carried out for different colors, as schematically illustrated in Fig. 8. Here, it is shown that first a sweep in the first direction x1 is carried out with red light R. Then, an opposite sweep in the second direction x2 is carried out with red light R. Subsequently, sweeps in the first and second direction are carried with green light G, and then with blue light B. Of course, other colors/wavelengths and other orders of color sweeps can be used as long as for each color a sweep in both directions is carried out.

By using different colors of projection light it is on the one hand possible to further reduce the effect of event detection pixel latency. In fact, surfaces within the scene might have different degrees of brightness for different colors. Thus, the delay in event detection will be different for different colors. Thus, depth maps generated for the different colors will have different degrees of errors. In particular, errors at observed surfaces may be large for one color, while they are minor for other colors. For example, green surfaces will appear bright for a sweep with green light, while they appear darker for the other colors. Thus, combining the results of different color sweeps can further improve the accuracy of the resulting depth map in cases where latency compensation was not fully successful. Using different colors for the series of light patches increases therefore the reliability of the depth map further.

Additionally or alternatively, the control unit 1030 may be configured to determine the absolute magnitude of light intensity for each of the different colors used in the plurality of temporal series of light patches. Thus, just as described above, for each color it will be possible to determine the respective absolute light intensity. This can be used to supplement the generated depth map with color information or to generate a color image of the scene.

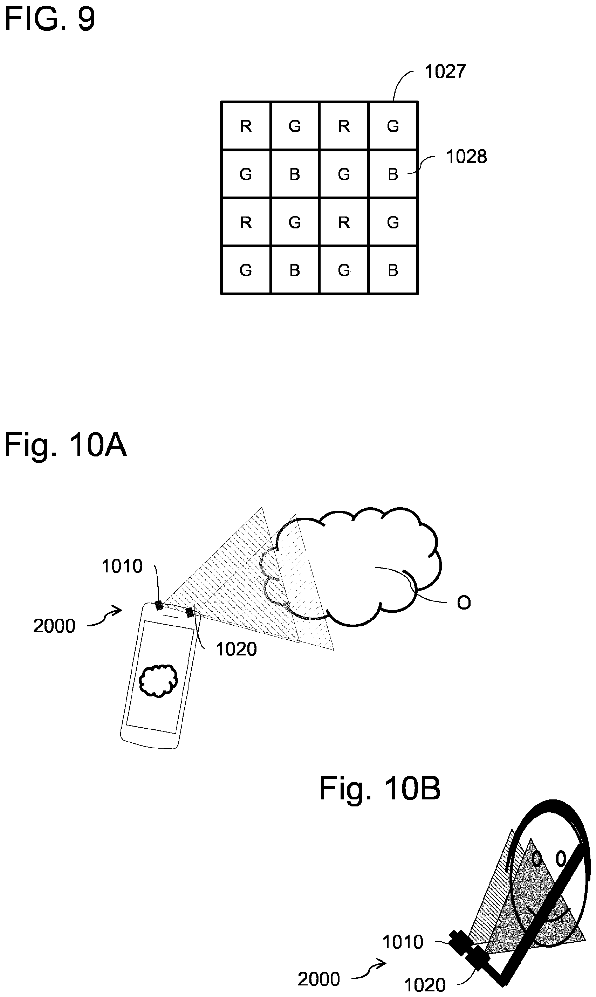

Additionally or alternatively, the receiver unit 1020 may comprise a color filter array 1027 that provides color filters 1028 of different color for the event detection pixels 1025. An example of such a color filter array 1027 is shown in Fig. 9 for RGB color filters 1028. Of course, any other color or arrangement of color filters 1028 can be used. The control unit 1030 is then configured to determine the absolute magnitude of light intensity for each of the different colors used in the color filters 1028. Also the usage of a color filter array allows to obtain brightness information for different colors and can be used to supplement the generated depth map with color information or to generate a color image of the scene. Of course, usage of different colors of projection light and usage of color filters can be combined to further improve the reliability of the color information.

In this manner it is possible to generate highly reliable depth maps, if necessary supplemented with brightness or color information, in a temporally highly resolved manner that is obtainable by using event detection.

In the following exemplary fields of use of the sensor device 1000 presented above will be discussed briefly.

Figs. 10A and 10B show schematically camera devices 2000 that comprise the sensor device 1000 described above. Here, the camera device 2000 is configured to generate depth information on a captured scene containing the object O in the manner described above.

Fig. 10A shows a smart phone that is used to obtain depth information such as a depth map of an object O. This might be used to improve augmented reality functions of the smart phone or to enhance game experiences available on the smart phone. Fig. 10B shows a face capture sensor that might be used e.g. for face recognition at airports or boarder control, for viewpoint correction or artificial makeup in web meetings, or to animate chat avatars for web meeting or gaming. Further, movie/animation creators might use such an EVS-enhanced face capture sensor to adapt animated figures to real live persons.

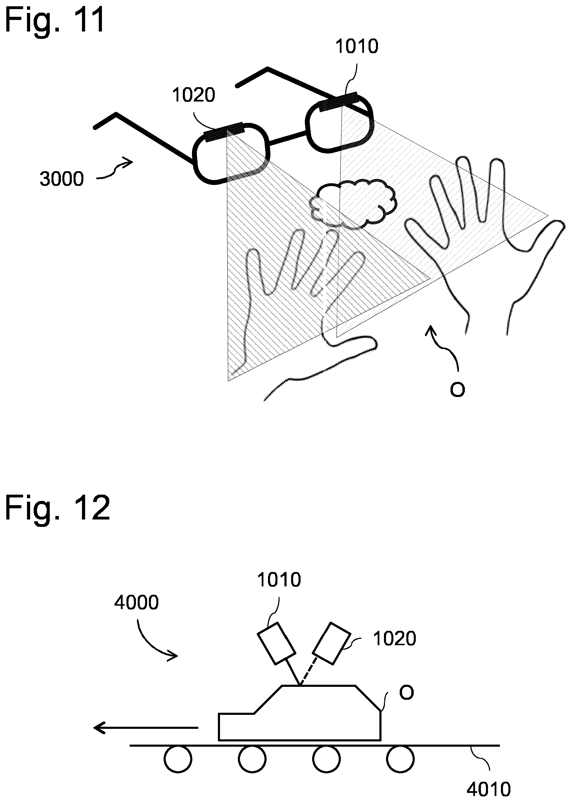

Fig. 11 shows as further example a head mounted display 3000 that comprises a sensor device 1000 as described above, wherein the head mounted display 3000 is configured to generate depth information of an object O viewed through the head mounted display 3000 as described above. This example might be used for accurate hand tracking or gesture recognition in augmented reality or virtual reality applications, e.g. in aiding complicated medical tasks.

Fig. 12 shows schematically an industrial production device 4000 that comprises a sensor device 1000 as described above, wherein the industrial production device 4000 comprises means 4010 to move objects O in front of the projector unit 1010 in order to (partly) achieve the projection of the illumination pattern onto different locations of the objects O, and the industrial production device 4000 is configured to generate depth information for the objects O based on the positions of the images of the illumination patterns. This application is particularly adapted to EVS-enhanced depth sensors, since conveyor belts constituting e.g. the means 4010 to move objects O have a high movement speed that allows generation of depth information only if the receiver unit 1020 has a sufficiently high time resolution. Since this is the case for the EVS-enhanced sensor devices 1000 described above accurate and high-speed depth maps of industrially produced objects O can be obtained that allows fully automated, accurate, and fast quality control of the produced objects O. The depth information may contain a depth map and/or a classification of object position on the conveyor belt, information on deviations from desired production standards, error classification and the like. Here, the means 4010 to move objects O will have to move the objects at least twice in opposite directions past the sensor device 1000, or the projector unit 1010 will have to sweep in both directions, while the conveyor belt has been stopped (or even while it is moving, if the resulting motion blur is compensated). In this example there will be a synchronization with an knowledge of the conveyor speed that is fed back to the sensor device 1000.

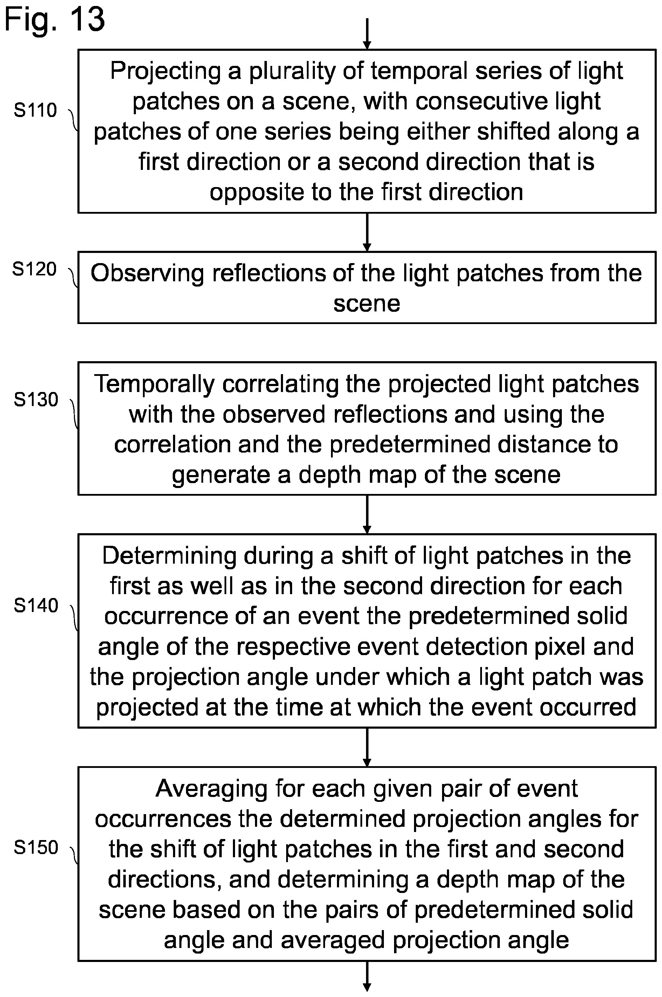

Fig. 13 summarizes the steps of the method for generating a depth map of a scene with a sensor device 1000 as described above. The method for operating the sensor device 1000 comprises:
At S110 projecting a plurality of temporal series of light patches on the scene, with consecutive light patches of one series being either shifted along a first direction x1 or a second direction x2 that is opposite to the first direction x1.
At S120 observing reflections of the light patches from the scene.
At S130 temporally correlating the projected light patches with the observed reflections and using the correlation and the predetermined distance to generate the depth map of the scene.
At S140 determining during a shift of light patches in the first direction x1 as well as during a shift of light patches in the second direction x2 for each occurrence of an event the predetermined solid angle of the respective event detection pixel 1025 and the projection angle under which a light patch was projected at the time at which the event occurred.
And at S150 averaging for each given pair of event occurrences the respectively determined projection angles for the shift of light patches in the first direction x1 and the shift of light patches in the second direction x2, and determining a depth map of the scene based on the pairs of predetermined solid angle and averaged projection angle determined for each event occurrence.

In this manner the above-described enhancement in accuracy and reliability of event-based generation of depth maps can be obtained.

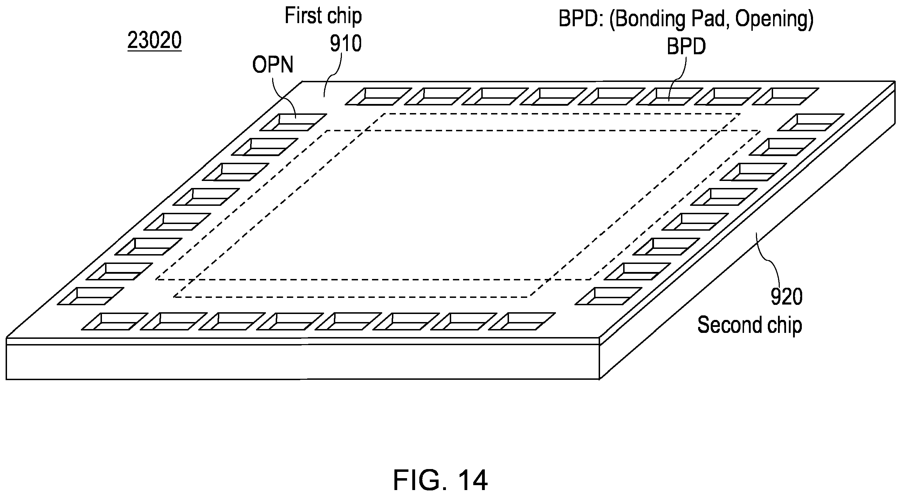

Fig. 14 is a perspective view showing an example of a laminated structure of a solid-state imaging device 23020 with a plurality of pixels arranged matrix-like in array form in which the functions described above may be implemented. Each pixel includes at least one photoelectric conversion element.

The solid-state imaging device 23020 has the laminated structure of a first chip (upper chip) 910 and a second chip (lower chip) 920.

The laminated first and second chips 910, 920 may be electrically connected to each other through TC(S)Vs (Through Contact (Silicon) Vias) formed in the first chip 910.

The solid-state imaging device 23020 may be formed to have the laminated structure in such a manner that the first and second chips 910 and 920 are bonded together at wafer level and cut out by dicing.

In the laminated structure of the upper and lower two chips, the first chip 910 may be an analog chip (sensor chip) including at least one analog component of each pixel, e.g., the photoelectric conversion elements arranged in array form. For example, the first chip 910 may include only the photoelectric conversion elements.

Alternatively, the first chip 910 may include further elements of each photoreceptor module. For example, the first chip 910 may include, in addition to the photoelectric conversion elements, at least some or all of the n-channel MOSFETs of the photoreceptor modules. Alternatively, the first chip 910 may include each element of the photoreceptor modules.

The first chip 910 may also include parts of the pixel back-ends 300. For example, the first chip 910 may include the memory capacitors, or, in addition to the memory capacitors sample/hold circuits and/or buffer circuits electrically connected between the memory capacitors and the event-detecting comparator circuits. Alternatively, the first chip 910 may include the complete pixel back-ends. With reference to Fig. 13A, the first chip 910 may also include at least portions of the readout circuit 140, the threshold generation circuit 130 and/or the controller 120 or the entire control unit.

The second chip 920 may be mainly a logic chip (digital chip) that includes the elements complementing the circuits on the first chip 910 to the solid-state imaging device 23020. The second chip 920 may also include analog circuits, for example circuits that quantize analog signals transferred from the first chip 910 through the TCVs.

The second chip 920 may have one or more bonding pads BPD and the first chip 910 may have openings OPN for use in wire-bonding to the second chip 920.

The solid-state imaging device 23020 with the laminated structure of the two chips 910, 920 may have the following characteristic configuration:
The electrical connection between the first chip 910 and the second chip 920 is performed through, for example, the TCVs. The TCVs may be arranged at chip ends or between a pad region and a circuit region. The TCVs for transmitting control signals and supplying power may be mainly concentrated at, for example, the four corners of the solid-state imaging device 23020, by which a signal wiring area of the first chip 910 can be reduced.

Typically, the first chip 910 includes a p-type substrate and formation of p-channel MOSFETs typically implies the formation of n-doped wells separating the p-type source and drain regions of the p-channel MOSFETs from each other and from further p-type regions. Avoiding the formation of p-channel MOSFETs may therefore simplify the manufacturing process of the first chip 910.

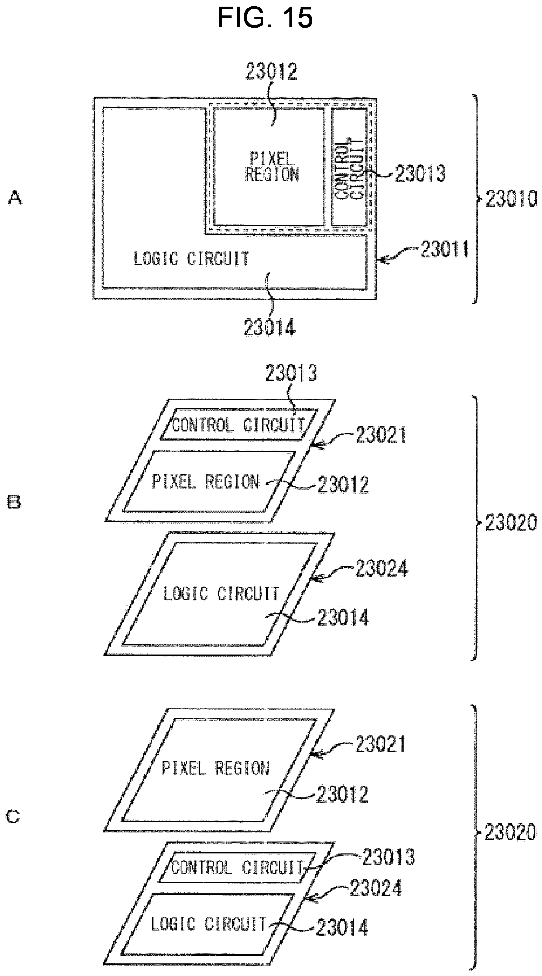

Fig. 15 illustrates schematic configuration examples of solid- state imaging devices 23010, 23020.

The single-layer solid-state imaging device 23010 illustrated in part A of Fig. 15 includes a single die (semiconductor substrate) 23011. Mounted and/or formed on the single die 23011 are a pixel region 23012 (photoelectric conversion elements), a control circuit 23013 (readout circuit, threshold generation circuit, controller, control unit), and a logic circuit 23014 (pixel back-end). In the pixel region 23012, pixels are disposed in an array form. The control circuit 23013 performs various kinds of control including control of driving the pixels. The logic circuit 23014 performs signal processing.

Parts B and C of Fig. 15 illustrate schematic configuration examples of multi-layer solid-state imaging devices 23020 with laminated structure. As illustrated in parts B and C of Fig. 15, two dies (chips), namely a sensor die 23021 (first chip) and a logic die 23024 (second chip), are stacked in a solid-state imaging device 23020. These dies are electrically connected to form a single semiconductor chip.

With reference to part B of Fig. 15, the pixel region 23012 and the control circuit 23013 are formed or mounted on the sensor die 23021, and the logic circuit 23014 is formed or mounted on the logic die 23024. The logic circuit 23014 may include at least parts of the pixel back-ends. The pixel region 23012 includes at least the photoelectric conversion elements.

With reference to part C of Fig. 15, the pixel region 23012 is formed or mounted on the sensor die 23021, whereas the control circuit 23013 and the logic circuit 23014 are formed or mounted on the logic die 23024.

According to another example (not illustrated), the pixel region 23012 and the logic circuit 23014, or the pixel region 23012 and parts of the logic circuit 23014 may be formed or mounted on the sensor die 23021, and the control circuit 23013 is formed or mounted on the logic die 23024.

Within a solid-state imaging device with a plurality of photoreceptor modules PR, all photoreceptor modules PR may operate in the same mode. Alternatively, a first subset of the photoreceptor modules PR may operate in a mode with low SNR and high temporal resolution and a second, complementary subset of the photoreceptor module may operate in a mode with high SNR and low temporal resolution. The control signal may also not be a function of illumination conditions but, e.g., of user settings.

### <Application Example to Mobile Body>

The technology according to the present disclosure may be realized, e.g., as a device mounted in a mobile body of any type such as automobile, electric vehicle, hybrid electric vehicle, motorcycle, bicycle, personal mobility, airplane, drone, ship, or robot.

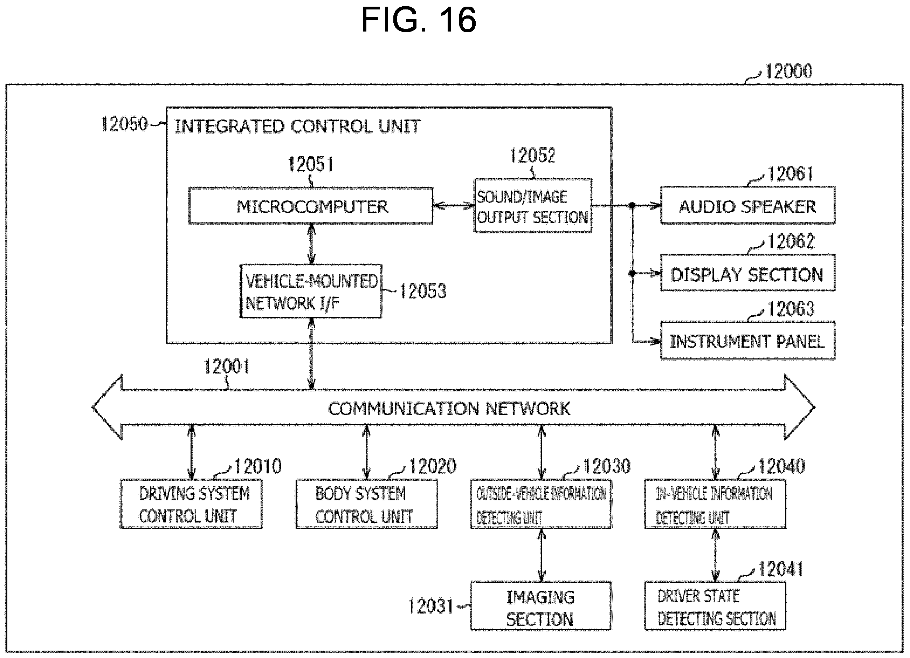

Fig. 16 is a block diagram depicting an example of schematic configuration of a vehicle control system as an example of a mobile body control system to which the technology according to an embodiment of the present disclosure can be applied.

The vehicle control system 12000 includes a plurality of electronic control units connected to each other via a communication network 12001. In the example depicted in Fig. 16, the vehicle control system 12000 includes a driving system control unit 12010, a body system control unit 12020, an outside-vehicle information detecting unit 12030, an in-vehicle information detecting unit 12040, and an integrated control unit 12050. In addition, a microcomputer 12051, a sound/image output section 12052, and a vehicle-mounted network interface (I/F) 12053 are illustrated as a functional configuration of the integrated control unit 12050.

The driving system control unit 12010 controls the operation of devices related to the driving system of the vehicle in accordance with various kinds of programs. For example, the driving system control unit 12010 functions as a control device for a driving force generating device for generating the driving force of the vehicle, such as an internal combustion engine, a driving motor, or the like, a driving force transmitting mechanism for transmitting the driving force to wheels, a steering mechanism for adjusting the steering angle of the vehicle, a braking device for generating the braking force of the vehicle, and the like.

The body system control unit 12020 controls the operation of various kinds of devices provided to a vehicle body in accordance with various kinds of programs. For example, the body system control unit 12020 functions as a control device for a keyless entry system, a smart key system, a power window device, or various kinds of lamps such as a headlamp, a backup lamp, a brake lamp, a turn signal, a fog lamp, or the like. In this case, radio waves transmitted from a mobile device as an alternative to a key or signals of various kinds of switches can be input to the body system control unit 12020. The body system control unit 12020 receives these input radio waves or signals, and controls a door lock device, the power window device, the lamps, or the like of the vehicle.

The outside-vehicle information detecting unit 12030 detects information about the outside of the vehicle including the vehicle control system 12000. For example, the outside-vehicle information detecting unit 12030 is connected with an imaging section 12031. The outside-vehicle information detecting unit 12030 makes the imaging section 12031 imaging an image of the outside of the vehicle, and receives the imaged image. On the basis of the received image, the outside-vehicle information detecting unit 12030 may perform processing of detecting an object such as a human, a vehicle, an obstacle, a sign, a character on a road surface, or the like, or processing of detecting a distance thereto.

The imaging section 12031 may be or may include a solid-state imaging sensor with event detection and photoreceptor modules according to the present disclosure. The imaging section 12031 may output the electric signal as position information identifying pixels having detected an event. The light received by the imaging section 12031 may be visible light, or may be invisible light such as infrared rays or the like.

The in-vehicle information detecting unit 12040 detects information about the inside of the vehicle and may be or may include a solid-state imaging sensor with event detection and photoreceptor modules according to the present disclosure. The in-vehicle information detecting unit 12040 is, for example, connected with a driver state detecting section 12041 that detects the state of a driver. The driver state detecting section 12041, for example, includes a camera focused on the driver. On the basis of detection information input from the driver state detecting section 12041, the in-vehicle information detecting unit 12040 may calculate a degree of fatigue of the driver or a degree of concentration of the driver, or may determine whether the driver is dozing.

The microcomputer 12051 can calculate a control target value for the driving force generating device, the steering mechanism, or the braking device on the basis of the information about the inside or outside of the vehicle which information is obtained by the outside-vehicle information detecting unit 12030 or the in-vehicle information detecting unit 12040, and output a control command to the driving system control unit 12010. For example, the microcomputer 12051 can perform cooperative control intended to implement functions of an advanced driver assistance system (ADAS) which functions include collision avoidance or shock mitigation for the vehicle, following driving based on a following distance, vehicle speed maintaining driving, a warning of collision of the vehicle, a warning of deviation of the vehicle from a lane, or the like.

In addition, the microcomputer 12051 can perform cooperative control intended for automatic driving, which makes the vehicle to travel autonomously without depending on the operation of the driver, or the like, by controlling the driving force generating device, the steering mechanism, the braking device, or the like on the basis of the information about the outside or inside of the vehicle which information is obtained by the outside-vehicle information detecting unit 12030 or the in-vehicle information detecting unit 12040.

In addition, the microcomputer 12051 can output a control command to the body system control unit 12020 on the basis of the information about the outside of the vehicle which information is obtained by the outside-vehicle information detecting unit 12030. For example, the microcomputer 12051 can perform cooperative control intended to prevent a glare by controlling the headlamp so as to change from a high beam to a low beam, for example, in accordance with the position of a preceding vehicle or an oncoming vehicle detected by the outside-vehicle information detecting unit 12030.

The sound/image output section 12052 transmits an output signal of at least one of a sound or an image to an output device capable of visually or audible notifying information to an occupant of the vehicle or the outside of the vehicle. In the example of Fig. 16, an audio speaker 12061, a display section 12062, and an instrument panel 12063 are illustrated as the output device. The display section 12062 may, for example, include at least one of an on-board display or a head-up display.

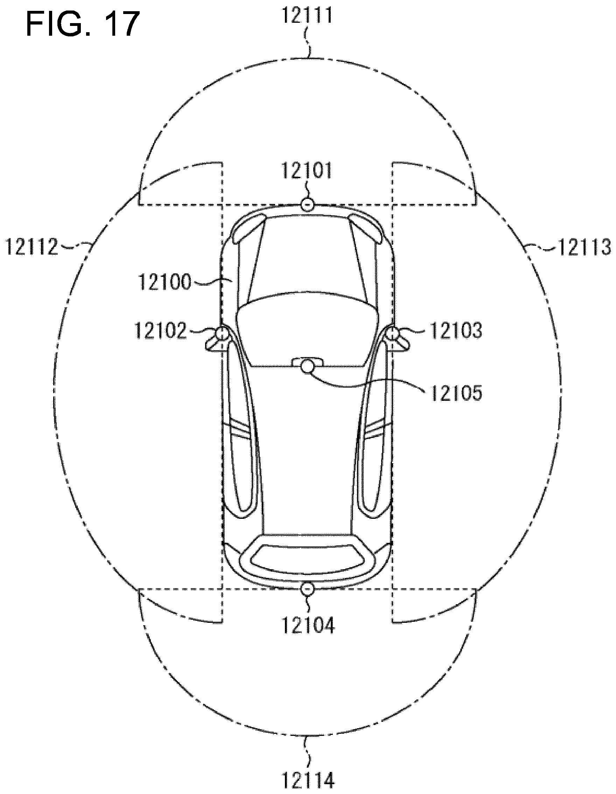

Fig. 17 is a diagram depicting an example of the installation position of the imaging section 12031, wherein the imaging section 12031 may include imaging sections 12101, 12102, 12103, 12104, and 12105.

The imaging sections 12101, 12102, 12103, 12104, and 12105 are, for example, disposed at positions on a front nose, side-view mirrors, a rear bumper, and a back door of the vehicle 12100 as well as a position on an upper portion of a windshield within the interior of the vehicle. The imaging section 12101 provided to the front nose and the imaging section 12105 provided to the upper portion of the windshield within the interior of the vehicle obtain mainly an image of the front of the vehicle 12100. The imaging sections 12102 and 12103 provided to the side view mirrors obtain mainly an image of the sides of the vehicle 12100. The imaging section 12104 provided to the rear bumper or the back door obtains mainly an image of the rear of the vehicle 12100. The imaging section 12105 provided to the upper portion of the windshield within the interior of the vehicle is used mainly to detect a preceding vehicle, a pedestrian, an obstacle, a signal, a traffic sign, a lane, or the like.

Incidentally, Fig. 17 depicts an example of photographing ranges of the imaging sections 12101 to 12104. An imaging range 12111 represents the imaging range of the imaging section 12101 provided to the front nose. Imaging ranges 12112 and 12113 respectively represent the imaging ranges of the imaging sections 12102 and 12103 provided to the side view mirrors. An imaging range 12114 represents the imaging range of the imaging section 12104 provided to the rear bumper or the back door. A bird's-eye image of the vehicle 12100 as viewed from above is obtained by superimposing image data imaged by the imaging sections 12101 to 12104, for example.

At least one of the imaging sections 12101 to 12104 may have a function of obtaining distance information. For example, at least one of the imaging sections 12101 to 12104 may be a stereo camera constituted of a plurality of imaging elements, or may be an imaging element having pixels for phase difference detection.

For example, the microcomputer 12051 can determine a distance to each three-dimensional object within the imaging ranges 12111 to 12114 and a temporal change in the distance (relative speed with respect to the vehicle 12100) on the basis of the distance information obtained from the imaging sections 12101 to 12104, and thereby extract, as a preceding vehicle, a nearest three-dimensional object in particular that is present on a traveling path of the vehicle 12100 and which travels in substantially the same direction as the vehicle 12100 at a predetermined speed (for example, equal to or more than 0 km/hour). Further, the microcomputer 12051 can set a following distance to be maintained in front of a preceding vehicle in advance, and perform automatic brake control (including following stop control), automatic acceleration control (including following start control), or the like. It is thus possible to perform cooperative control intended for automatic driving that makes the vehicle travel autonomously without depending on the operation of the driver or the like.

For example, the microcomputer 12051 can classify three-dimensional object data on three-dimensional objects into three-dimensional object data of a two-wheeled vehicle, a standard-sized vehicle, a largesized vehicle, a pedestrian, a utility pole, and other three-dimensional objects on the basis of the distance information obtained from the imaging sections 12101 to 12104, extract the classified three-dimensional object data, and use the extracted three-dimensional object data for automatic avoidance of an obstacle. For example, the microcomputer 12051 identifies obstacles around the vehicle 12100 as obstacles that the driver of the vehicle 12100 can recognize visually and obstacles that are difficult for the driver of the vehicle 12100 to recognize visually. Then, the microcomputer 12051 determines a collision risk indicating a risk of collision with each obstacle. In a situation in which the collision risk is equal to or higher than a set value and there is thus a possibility of collision, the microcomputer 12051 outputs a warning to the driver via the audio speaker 12061 or the display section 12062, and performs forced deceleration or avoidance steering via the driving system control unit 12010. The microcomputer 12051 can thereby assist in driving to avoid collision.

At least one of the imaging sections 12101 to 12104 may be an infrared camera that detects infrared rays. The microcomputer 12051 can, for example, recognize a pedestrian by determining whether or not there is a pedestrian in imaged images of the imaging sections 12101 to 12104. Such recognition of a pedestrian is, for example, performed by a procedure of extracting characteristic points in the imaged images of the imaging sections 12101 to 12104 as infrared cameras and a procedure of determining whether or not it is the pedestrian by performing pattern matching processing on a series of characteristic points representing the contour of the object. When the microcomputer 12051 determines that there is a pedestrian in the imaged images of the imaging sections 12101 to 12104, and thus recognizes the pedestrian, the sound/image output section 12052 controls the display section 12062 so that a square contour line for emphasis is displayed so as to be superimposed on the recognized pedestrian. The sound/image output section 12052 may also control the display section 12062 so that an icon or the like representing the pedestrian is displayed at a desired position.

The example of the vehicle control system to which the technology according to the present disclosure is applicable has been described above. By applying the photoreceptor modules for obtaining eventtriggered image information, the image data transmitted through the communication network may be reduced and it may be possible to reduce power consumption without adversely affecting driving support.

Additionally, embodiments of the present technology are not limited to the above-described embodiments, but various changes can be made within the scope of the present technology without departing from the gist of the present technology.

The solid-state imaging device according to the present disclosure may be any device used for analyzing and/or processing radiation such as visible light, infrared light, ultraviolet light, and X-rays. For example, the solid-state imaging device may be any electronic device in the field of traffic, the field of home appliances, the field of medical and healthcare, the field of security, the field of beauty, the field of sports, the field of agriculture, the field of image reproduction or the like.

Specifically, in the field of image reproduction, the solid-state imaging device may be a device for capturing an image to be provided for appreciation, such as a digital camera, a smart phone, or a mobile phone device having a camera function. In the field of traffic, for example, the solid-state imaging device may be integrated in an in-vehicle sensor that captures the front, rear, peripheries, an interior of the vehicle, etc. for safe driving such as automatic stop, recognition of a state of a driver, or the like, in a monitoring camera that monitors traveling vehicles and roads, or in a distance measuring sensor that measures a distance between vehicles or the like.

In the field of home appliances, the solid-state imaging device may be integrated in any type of sensor that can be used in devices provided for home appliances such as TV receivers, refrigerators, and air conditioners to capture gestures of users and perform device operations according to the gestures. Accordingly the solid-state imaging device may be integrated in home appliances such as TV receivers, refrigerators, and air conditioners and/or in devices controlling the home appliances. Furthermore, in the field of medical and healthcare, the solid-state imaging device may be integrated in any type of sensor, e.g. a solid-state image device, provided for use in medical and healthcare, such as an endoscope or a device that performs angiography by receiving infrared light.

In the field of security, the solid-state imaging device can be integrated in a device provided for use in security, such as a monitoring camera for crime prevention or a camera for person authentication use. Furthermore, in the field of beauty, the solid-state imaging device can be used in a device provided for use in beauty, such as a skin measuring instrument that captures skin or a microscope that captures a probe. In the field of sports, the solid-state imaging device can be integrated in a device provided for use in sports, such as an action camera or a wearable camera for sport use or the like. Furthermore, in the field of agriculture, the solid-state imaging device can be used in a device provided for use in agriculture, such as a camera for monitoring the condition of fields and crops.

## Claims

1. A sensor device (1000) for generating a depth map of a scene, the sensor device (1000) comprising
a projector unit (1010) that is configured to project a plurality of temporal series of light patches on the scene, with consecutive light patches of one series being either shifted along a first direction (x1) or a second direction (x2) that is opposite to the first direction (x1);
a receiver unit (1020) that is arranged at a predetermined distance (d) from the projector unit (1010) and configured to observe reflections of the light patches from the scene; and
a control unit (1030) that is configured to temporally correlate the projected light patches with the observed reflections and to use the correlation and the predetermined distance (d) to generate the depth map of the scene; wherein
the receiver unit (1020) comprises a plurality of event detection pixels (1025) that indicate occurrence of an event when a light intensity that is measured by a respective event detection pixel (1025) changes by more than a predetermined amount in a given time period;
the time it takes for an event detection pixel (1025) to indicate the occurrence of an event depends on the absolute magnitude of the light intensity before the change of light intensity;
each event detection pixel (1025) is configured to receive light only from a predetermined solid angle, wherein solid angles observed by adjacent event detection pixels (1025) are adjacent and the observed solid angles of all event detection pixels (1025) span the field of view of the receiver unit (1020);
the control unit (1030) is configured to determine during a shift of light patches in the first direction (x1) as well as during a shift of light patches in the second direction (x2) for each occurrence of an event the predetermined solid angle of the respective event detection pixel and the projection angle under which the projector unit (1010) did project a light patch at the time at which the event occurred; and
the control unit (1030) is configured to average for each given pair of event occurrences the respectively determined projection angles for the shift of light patches in the first direction (x1) and the shift of light patches in the second direction (x2), and to determine a depth map of the scene based on the pairs of predetermined solid angle and averaged projection angle determined for each event occurrence.

2. The sensor device (1000) according to claim 1, wherein
the temporal series of light patches is a temporal series of light lines (L).

3. The sensor device (1000) according to claim 2, wherein
the light lines (L) are straight lines that intersect the first direction (x1) under a predetermined angle; or
the light lines are curved lines.

4. The sensor device (1000) according to any one of claims 1 to 3, wherein
the control unit (1030) is configured to determine for each pair of event occurrences the absolute magnitude of light intensity before the change of light intensity by subtracting the respectively determined projection angles for the shift of light patches in the first direction (x1) and the shift of light patches in the second direction (x2).

5. The sensor device (1000) according to any one of claims 1 to 4, wherein
the plurality of temporal series of light patches includes series of light patches of different colors; and
for each series of light patches of one color that is shifted in the first direction (x1) there is a series of light patches of the same color that is shifted in the second direction (x2).

6. The sensor device (1000) according to claim 5, wherein
the control unit (1030) is configured to determine the absolute magnitude of light intensity for each of the different colors used in the plurality of temporal series of light patches.

7. The sensor device (1000) according to any one of claims 1 to 6, wherein
the receiver unit (1020) comprises a color filter array (1027) that provides color filters (1028) of different color for the event detection pixels (1025); and
the control unit (1030) is configured to determine the absolute magnitude of light intensity for each of the different colors used in the color filters (1028).

8. A method for operating a sensor device (1000) according to claim 1, the method comprising
projecting a plurality of temporal series of light patches on the scene, with consecutive light patches of one series being either shifted along a first direction (x1) or a second direction (x2) that is opposite to the first direction (x1);
observing reflections of the light patches from the scene;
temporally correlating the projected light patches with the observed reflections and using the correlation and the predetermined distance (d) to generate the depth map of the scene;
determining during a shift of light patches in the first direction (x1) as well as during a shift of light patches in the second direction (x2) for each occurrence of an event the predetermined solid angle of the respective event detection pixel (1025) and the projection angle under which a light patch was projected at the time at which the event occurred; and
averaging for each given pair of event occurrences the respectively determined projection angles for the shift of light patches in the first direction (x1) and the shift of light patches in the second direction (x2), and determining a depth map of the scene based on the pairs of predetermined solid angle and averaged projection angle determined for each event occurrence.

## Patentansprüche

1. Sensorvorrichtung (1000) zur Erzeugung einer Tiefenkarte einer Szene, wobei die Sensorvorrichtung (1000) umfasst
eine Projektoreinheit (1010), die konfiguriert ist, um eine Vielzahl von zeitlichen Reihen von Lichtflecken auf die Szene zu projizieren, wobei aufeinanderfolgende Lichtflecken einer Reihe entweder entlang einer ersten Richtung (x1) oder einer zweiten Richtung (x2), die der ersten Richtung (x1) entgegengesetzt ist, verschoben sind;
eine Empfängereinheit (1020), die in einem vorbestimmten Abstand (d) von der Projektoreinheit (1010) angeordnet ist und konfiguriert ist, um Reflexionen der Lichtflecken aus der Szene zu beobachten; und
eine Steuereinheit (1030), die konfiguriert ist, um die projizierten Lichtflecken zeitlich mit den beobachteten Reflexionen zu korrelieren und die Korrelation sowie den vorbestimmten Abstand (d) zu verwenden, um die Tiefenkarte der Szene zu erzeugen; wobei
die Empfängereinheit (1020) eine Vielzahl von Ereignisdetektionspixeln (1025) umfasst, die das Auftreten eines Ereignisses anzeigen, wenn sich eine Lichtintensität, die durch ein jeweiliges Ereignisdetektionspixel (1025) gemessen wird, um mehr als einen vorbestimmten Betrag in einer gegebenen Zeitspanne ändert;
die Zeit, die ein Ereignisdetektionspixel (1025) benötigt, um das Auftreten eines Ereignisses anzuzeigen, von der absoluten Stärke der Lichtintensität vor der Änderung der Lichtintensität abhängt;
jedes Ereignisdetektionspixel (1025) konfiguriert ist, um Licht nur aus einem vorbestimmten Raumwinkel zu empfangen, wobei Raumwinkel, die durch benachbarte Ereignisdetektionspixel (1025) beobachtet werden, benachbart sind und die beobachteten Raumwinkel aller Ereignisdetektionspixel (1025) das Sichtfeld der Empfängereinheit (1020) überspannen;
die Steuereinheit (1030) konfiguriert ist, um während einer Verschiebung von Lichtflecken in der ersten Richtung (x1) sowie während einer Verschiebung von Lichtflecken in der zweiten Richtung (x2) für jedes Auftreten eines Ereignisses den vorbestimmten Raumwinkel des jeweiligen Ereignisdetektionspixels und den Projektionswinkel zu bestimmen, unter dem die Projektoreinheit (1010) einen Lichtfleck zu dem Zeitpunkt projiziert hat, zu dem das Ereignis aufgetreten ist; und
die Steuereinheit (1030) konfiguriert ist, um für jedes gegebene Paar von Ereignisauftritten die jeweils bestimmten Projektionswinkel für die Verschiebung von Lichtflecken in der ersten Richtung (x1) und die Verschiebung von Lichtflecken in der zweiten Richtung (x2) zu mitteln, und eine Tiefenkarte der Szene basierend auf den Paaren aus vorbestimmtem Raumwinkel und gemitteltem Projektionswinkel zu bestimmen, die für jedes Auftreten eines Ereignisses bestimmt wurden.

2. Sensorvorrichtung (1000) nach Anspruch 1, wobei
die zeitliche Reihe von Lichtflecken eine zeitliche Reihe von Lichtlinien (L) ist.

3. Sensorvorrichtung (1000) nach Anspruch 2, wobei
die Lichtlinien (L) gerade Linien sind, die die erste Richtung (x1) unter einem vorbestimmten Winkel schneiden; oder
die Lichtlinien gekrümmte Linien sind.

4. Sensorvorrichtung (1000) nach einem der Ansprüche 1 bis 3, wobei
die Steuereinheit (1030) konfiguriert ist, um für jedes Paar von Ereignisauftritten die absolute Stärke der Lichtintensität vor der Änderung der Lichtintensität zu bestimmen, indem sie die jeweils bestimmten Projektionswinkel für die Verschiebung von Lichtflecken in der ersten Richtung (x1) und die Verschiebung von Lichtflecken in der zweiten Richtung (x2) subtrahiert.

5. Sensorvorrichtung (1000) nach einem der Ansprüche 1 bis 4, wobei
die Vielzahl von zeitlichen Reihen von Lichtflecken Reihen von Lichtflecken unterschiedlicher Farben umfasst; und
für jede Reihe von Lichtflecken einer Farbe, die in der ersten Richtung (x1) verschoben ist, eine Reihe von Lichtflecken derselben Farbe existiert, die in der zweiten Richtung (x2) verschoben ist.

6. Sensorvorrichtung (1000) nach Anspruch 5, wobei
die Steuereinheit (1030) konfiguriert ist, um die absolute Stärke der Lichtintensität für jede der verschiedenen Farben zu bestimmen, die in der Vielzahl von zeitlichen Reihen von Lichtflecken verwendet werden.

7. Sensorvorrichtung (1000) nach einem der Ansprüche 1 bis 6, wobei
die Empfängereinheit (1020) eine Farbfilteranordnung (1027) umfasst, die Farbfilter (1028) unterschiedlicher Farbe für die Ereignisdetektionspixel (1025) bereitstellt; und
die Steuereinheit (1030) konfiguriert ist, um die absolute Stärke der Lichtintensität für jede der verschiedenen Farben zu bestimmen, die in den Farbfiltern (1028) verwendet werden.

8. Verfahren zum Betreiben einer Sensorvorrichtung (1000) nach Anspruch 1, wobei das Verfahren umfasst
Projizieren einer Vielzahl von zeitlichen Reihen von Lichtflecken auf die Szene, wobei aufeinanderfolgende Lichtflecken einer Reihe entweder entlang einer ersten Richtung (x1) oder einer zweiten Richtung (x2), die der ersten Richtung (x1) entgegengesetzt ist, verschoben sind;
Beobachten von Reflexionen der Lichtflecken aus der Szene;
zeitliches Korrelieren der projizierten Lichtflecken mit den beobachteten Reflexionen und Verwenden der Korrelation sowie des vorbestimmten Abstands (d), um die Tiefenkarte der Szene zu erzeugen;
Bestimmen, während einer Verschiebung von Lichtflecken in der ersten Richtung (x1) sowie während einer Verschiebung von Lichtflecken in der zweiten Richtung (x2), für jedes Auftreten eines Ereignisses, des vorbestimmten Raumwinkels des jeweiligen Ereignisdetektionspixels (1025) und des Projektionswinkels, unter dem ein Lichtfleck zu dem Zeitpunkt projiziert wurde, zu dem das Ereignis aufgetreten ist; und
Mitteln, für jedes gegebene Paar von Ereignisauftritten, der jeweils bestimmten Projektionswinkel für die Verschiebung von Lichtflecken in der ersten Richtung (x1) und die Verschiebung von Lichtflecken in der zweiten Richtung (x2), und Bestimmen einer Tiefenkarte der Szene basierend auf den Paaren aus vorbestimmtem Raumwinkel und gemitteltem Projektionswinkel, die für jedes Auftreten eines Ereignisses bestimmt wurden.

## Revendications

1. Dispositif à capteur (1000) pour générer une carte de profondeur d'une scène, le dispositif à capteur (1000) comprenant
une unité de projecteur (1010) qui est configurée pour projeter une pluralité de séries temporelles de taches lumineuses sur la scène, avec des taches lumineuses consécutives d'une série étant décalées le long d'une première direction (x1) ou d'une seconde direction (x2) qui est opposée à la première direction (x1) ;
une unité réceptrice (1020) qui est disposée à une distance prédéterminée (d) de l'unité de projecteur (1010) et configurée pour observer les réflexions des taches lumineuses provenant de la scène ; et
une unité de commande (1030) qui est configurée pour corréler temporellement les taches lumineuses projetées avec les réflexions observées et pour utiliser la corrélation et la distance prédéterminée (d) afin de générer la carte de profondeur de la scène ; dans lequel
l'unité réceptrice (1020) comprend une pluralité de pixels de détection d'événement (1025) qui indiquent l'occurrence d'un événement lorsqu'une intensité lumineuse mesurée par un pixel de détection d'événement respectif (1025) change de plus d'une quantité prédéterminée au cours d'une période de temps donnée ;
le temps nécessaire à un pixel de détection d'événement (1025) pour indiquer l'occurrence d'un événement dépend de l'amplitude absolue de l'intensité lumineuse avant le changement d'intensité lumineuse ;
chaque pixel de détection d'événement (1025) est configuré pour recevoir la lumière uniquement à partir d'un angle solide prédéterminé, dans lequel les angles solides observés par des pixels de détection d'événements adjacents (1025) sont adjacents et les angles solides observés de tous les pixels de détection d'événements (1025) couvrent le champ de vision de l'unité réceptrice (1020) ;
l'unité de commande (1030) est configurée pour déterminer pendant un décalage de taches lumineuses dans la première direction (x1) ainsi que pendant un décalage de taches lumineuses dans la seconde direction (x2) pour chaque occurrence d'un événement, l'angle solide prédéterminé du pixel de détection d'événement respectif et l'angle de projection sous lequel l'unité du projecteur (1010) a projeté une tache lumineuse au moment où l'événement s'est produit ; et
l'unité de commande (1030) est configurée pour faire la moyenne, pour chaque paire donnée d'occurrences d'événements, des angles de projection respectivement déterminés pour le décalage de taches lumineuses dans la première direction (x1) et le décalage de taches lumineuses dans la seconde direction (x2), et pour déterminer une carte de profondeur de la scène sur la base des paires d'angle solide prédéterminé et d'angle de projection moyenné déterminées pour chaque occurrence d'événement.

2. Dispositif de capteur (1000) selon la revendication 1, dans lequel
la série temporelle de taches lumineuses est une série temporelle de lignes lumineuses (L).

3. Dispositif de capteur (1000) selon la revendication 2, dans lequel
les lignes lumineuses (L) sont des lignes droites qui coupent la première direction (x1) sous un angle prédéterminé ; ou
les lignes lumineuses sont des lignes courbes.

4. Dispositif de capteur (1) selon l'une quelconque des revendications 1 à 3, dans lequel
l'unité de commande (1030) est configurée pour déterminer, pour chaque paire d'occurrences d'événements, l'amplitude absolue de l'intensité lumineuse avant le changement d'intensité lumineuse en soustrayant les angles de projection respectivement déterminés pour le décalage des taches lumineuses dans la première direction (x1) et le décalage des taches lumineuses dans la seconde direction (x2).

5. Dispositif de capteur (1) selon l'une quelconque des revendications 1 à 4, dans lequel
la pluralité de séries temporelles de taches lumineuses comporte des séries de taches lumineuses de couleurs différentes ; et
pour chaque série de taches lumineuses d'une couleur qui est décalée dans la première direction (x1), il existe une série de taches lumineuses de la même couleur qui est décalée dans la seconde direction (x2).

6. Dispositif de capteur (1000) selon la revendication 5, dans lequel
l'unité de commande (1030) est configurée pour déterminer l'amplitude absolue d'intensité lumineuse pour chacune des différentes couleurs utilisées dans la pluralité de séries temporelles de taches lumineuses.

7. Dispositif de capteur (1000) selon l'une quelconque des revendications 1 à 6, dans lequel
l'unité réceptrice (1020) comprend un réseau de filtres de couleur (1027) qui fournit des filtres de couleur (1028) de couleur différente pour les pixels de détection d'événement (1025) ; et
l'unité de commande (1030) est configurée pour déterminer l'amplitude absolue d'intensité lumineuse pour chacune des différentes couleurs utilisées dans les filtres de couleur (1028).

8. Procédé pour exécution par un dispositif de capteur (1000) selon la revendication 1, le procédé comprenant
la projection d'une pluralité de séries temporelles de taches lumineuses sur la scène, les taches lumineuses consécutives d'une série étant décalées le long d'une première direction (x1) ou d'une seconde direction (x2) qui est opposée à la première direction (x1) ;
l'observation des reflets des taches lumineuses de la scène ;
la corrélation temporelle des taches lumineuses projetées avec les réflexions observées et l'utilisation de la corrélation et de la distance prédéterminée (d) pour générer la carte de profondeur de la scène ;
la détermination, pendant un décalage de taches lumineuses dans la première direction (x1) ainsi que pendant un décalage de taches lumineuses dans la seconde direction (x2) pour chaque occurrence d'un événement, de l'angle solide prédéterminé du pixel de détection d'événement respectif (1025) et de l'angle de projection sous lequel une tache lumineuse a été projetée au moment auquel l'événement s'est produit ; et
le calcul de la moyenne, pour chaque paire donnée d'occurrences d'événements, des angles de projection respectivement déterminés pour le décalage des taches lumineuses dans la première direction (x1) et le décalage des taches lumineuses dans la seconde direction (x2), et la détermination d'une carte de profondeur de la scène sur la base des paires d'angle solide prédéterminé et d'angle de projection moyenné déterminés pour chaque occurrence d'événement.
